# FASCICULE DE BREVET EUROPEEN

(11) **EP 0 437 501 B1**
(45) Date de publication et mention de la délivrance du brevet: **05.01.1994**
(21) Numéro de dépôt: 89911571.1
(22) Date de dépôt: 02.10.1989
(51) Int. Cl.: B07C 3/08

(54) **MACHINE DE TRI AUTOMATIQUE D'OBJETS**
SELBSTTÄTIGE SORTIERUNGSVORRICHTUNG FÜR GEGENSTÄNDE
MACHINE FOR THE AUTOMATIC SORTING OF OBJECTS

(30) Priorité: 04.10.1988 FR 8813241
(43) Date de publication de la demande: 24.07.1991
(73) Titulaire: AUTOMATISME NOUVEAU ORGANISATION, 78420 Carriere-sur-Seine (FR); Cailbault, Christian Jean Gérard, F-85100 Le Château d'Olonne (FR)
(72) Inventeur: CAILBAULT, Christian, Jean, Gérard, F-85340 Le Château-d'Olonne (FR)
(74) Mandataire: CABINET BONNET-THIRION
(86) Numéro de dépôt international: FR8900509
(87) Numéro de publication internationale: WO9003853

(56) Documents cités:
- FR-A- 953 469
- FR-A- 1 136 552
- US-A- 1 852 428
- US-A- 3 055 480
- US-A- 4 567 988

## Description

L'invention se rapporte à une machine de tri automatique d'objets, plus particulièrement conçue pour traiter des objets de formes variées et de dimensions quelconques, en vue de regrouper ces objets en des emplacements spécifiques, par exemple pour les acheminer ultérieurement vers une destination correspondante ou vers une autre machine.

De tels objets sont, dans la majorité des cas, identifiés par codes barres, codes magnétiques ou par des inscriptions susceptibles d'être lues par un système de reconnaissance de caractères, ou par d'autres moyens analogues. Ces différentes informations sont traitées par un ordinateur qui attribue à l'objet une destination correspondant à un emplacement spécifique précité. A titre d'exemple, une telle machine peut être destinée au tri de pochettes de photographies, dans un laboratoire de développement, pour le regroupement de telles pochettes en vue de leur expédition vers différents destinataires. Elle peut aussi être utilisée dans des laboratoires pharmaceutiques et dans des messageries traitant des quantités importantes de courriers, journaux et paquets. Traditionnellement, une telle machine déplace les objets sur des bandes transporteuses possédant des sorties à déviation latérale ou des trappes s'ouvrant sur le passage de tel ou tel objet.

A titre d'exemple, les machines connues dans le domaine des centres de développement de photographies ne permettent que le transport de pochettes standardisées, identiques et de faible épaisseur. L'insertion des objets dans la machine s'effectue en laissant tomber lesdits objets sur un convoyeur. C'est notamment le cas dans les documents US 4 567 988 et FR 953 469.

Le dispositif de l'invention permet de transporter simultanément des objets de formes diverses, de volumes et poids différents sans réglage préalable de l'installation. Elle propose un nouveau concept de trieur, utilisant des pinces pour le transport des objets et un système de chargement permettant d'insérer lesdits objets dans les pinces ouvertes, par le bas, au moyen d'un convoyeur-élévateur.

Plus précisément, l'invention concerne donc une machine de tri automatique d'objets, comprenant:
- un convoyeur-distributeur en boucle fermée, agencé essentiellement horizontalement au-dessus d'un certain nombre d'emplacements de réception et portant une pluralité de premiers supports d'objets commandés,
- des moyens d'actionnement desdits premiers supports d'objets, placés auxdits emplacements de réception,
- un convoyeur-élévateur en boucle fermée muni d'une pluralité de seconds supports d'objets, agencé au-dessous dudit convoyeur-distributeur et au voisinage d'un emplacement de chargement, une partie de la course dudit convoyeur-élévateur étant ascendante pour acheminer lesdits seconds supports d'objets jusqu'au niveau desdits premiers supports d'objets,
   caractérisée en ce que chaque premier support d'objet comporte un bras mobile avant et un bras mobile arrière articulés et sollicités par ressort l'un vers l'autre pour former une pince, en ce que des moyens d'actionnement sont prévus audit emplacement de chargement pour ouvrir une pince précitée qui s'y présente et en ce que les trajectoires dudit convoyeur-distributeur et dudit convoyeur-élévateur sont telles que lesdits seconds supports d'objets apportent respectivement lesdits objets dans lesdits premiers supports d'objets ouverts.

Les supports d'objets du convoyeur-élévateur pourront avantageusement avoir la forme de fourches de façon que les doigts d'une telle fourche puissent s'imbriquer momentanément entre des bras et broches d'une pince (qui seront décrits plus loin) et faciliter ainsi le transfert des objets du convoyeur-élévateur vers le convoyeur-distributeur.

Avec ce type de transfert, l'invention permet de transporter des objets de formes diverses, de volumes et poids différents comme par exemple, des enveloppes, des paquets, des tubes d'emballage, sans qu'il soit nécessaire de régler ou de modifier manuellement les réglages du trieur. Les mouvements mécaniques de la machine sont rotatifs et continus, permettant ainsi une synchronisation simple et fiable sur une large gamme de vitesses. L'insertion d'un objet dans la pince se fait par la mise en oeuvre du convoyeur-élévateur qui peut être agencé au ras du sol ou sous la surface du sol, ce qui facilite l'accès tout autour de la machine.

Selon une autre caractéristique intéressante de l'invention, la composante horizontale du déplacement dudit convoyeur-élévateur est de même sens que celui du déplacement dudit convoyeur-distributeur. Autrement dit, le support d'objets du convoyeur-élévateur progresse, dans sa course ascendante, globalement dans la même direction et en quelque sorte "à la poursuite" du support d'objet formant pince qui lui correspond (momentanément ouvert) lequel, en se refermant, saisit l'objet qui lui est présenté. Ainsi, même si les deux convoyeurs fonctionnent à des vitesses relativement élevées, la prise en charge de l'objet par la pince s'opère à une vitesse relative assez faible, et donc avec une excellente fiabilité.

L'invention sera mieux comprise et d'autres avantages de celle-ci apparaîtront plus clairement à la lumière de la description qui va suivre d'une installation conforme à son principe, donnée uniquement à titre d'exemple et faite en référence aux dessins annexés dans lesquels:
- la figure 1 est une vue en élévation d'une pince de l'installation représentée ouverte au-dessus d'un emplacement de réception;
- la figure 2 représente une pince analogue à celle de la figure 1, vue de l'autre côté et représentée à un emplacement de chargement;
- la figure 3 est une autre élévation d'une telle pince, fermée à vide, vue suivant la flèche III de la figure 1;
- la figure 4 est une vue en élévation d'une partie de la machine et plus particulièrement du convoyeur-élévateur;
- la figure 5 est une vue de détail d'un support d'objets dudit convoyeur-élévateur;
- les figures 6 à 9 représentent schématiquement des pinces à différents stades de leur fonctionnement;
- la figure 10 est une vue schématique de dessus d'une autre partie de la machine montrant plus particulièrement des moyens de transport alimentant ledit convoyeur-élévateur;
- la figure 11 représente schématiquement la même partie de la machine telle qu'illustrée à la figure 10, vue suivant la flèche XI de celle-ci,
- les figures 12 à 14 illustrent une variante d'une pince et son mode de fonctionnement; et
- la figure 15 est une vue suivant la flèche XV de la figure 12.

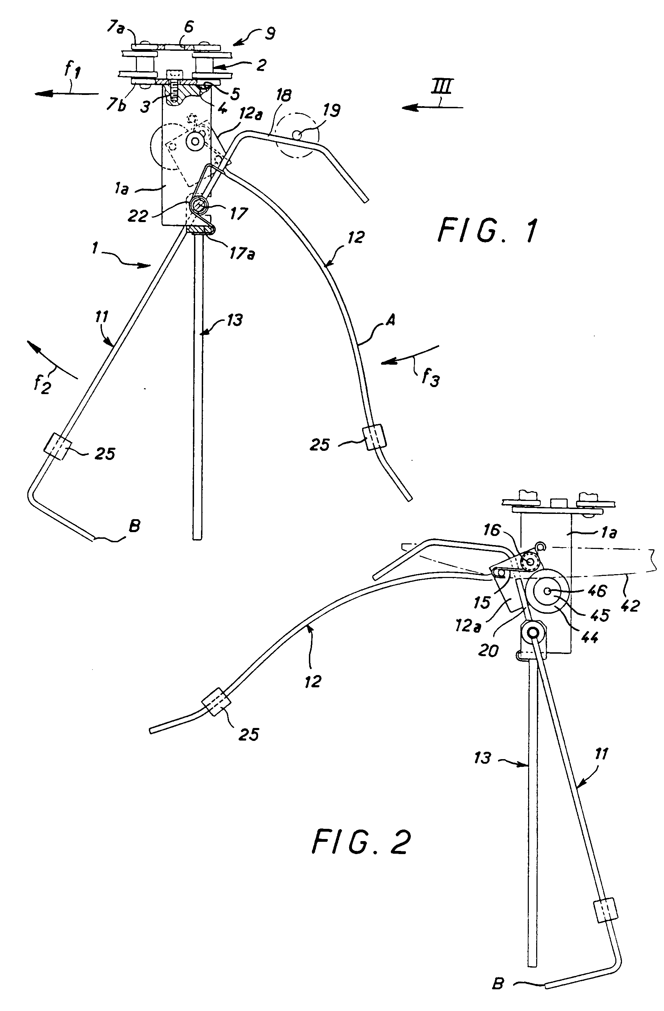

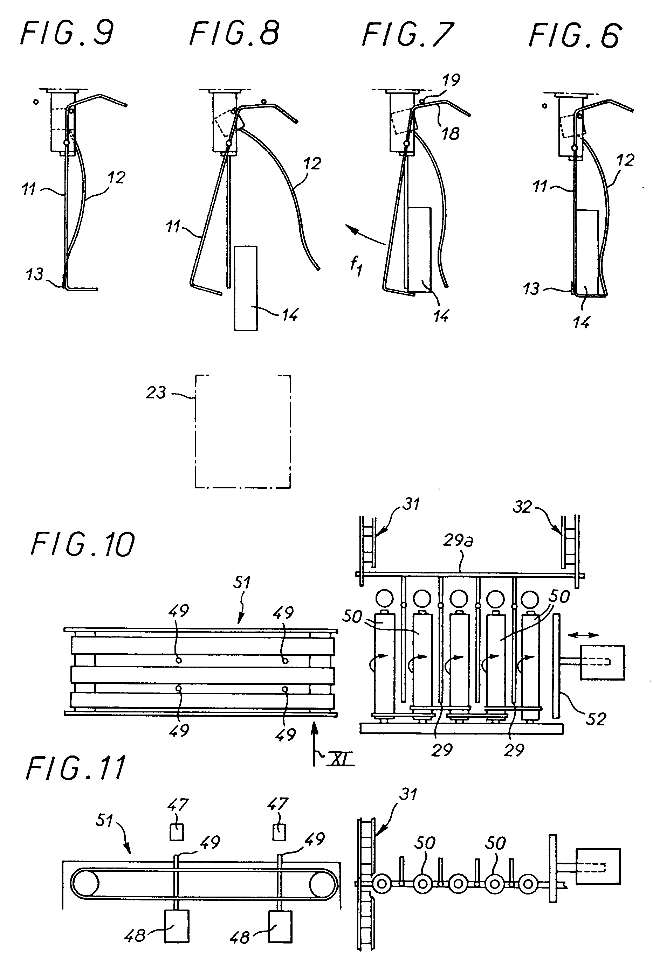

En se reportant plus particulièrement aux figures 1 à 4, on a représenté les parties essentielles de la machine de tri automatique des objets 14, comprenant essentiellement un convoyeur-distributeur 9 en boucle fermée, muni de premiers supports d'objets 1 formant pinces, agencé essentiellement horizontalement au-dessus d'un certain nombre d'emplacements de réception et un convoyeur-élévateur 10, en boucle fermée, agencé au-dessous du convoyeur-distributeur 9 au voisinage d'un emplacement de chargement de ce dernier. Le convoyeur-distributeur comporte des seconds supports d'objets 29. Dans l'exemple représenté, ces supports d'objets 29 forment des sortes de fourches, comme cela est plus particulièrement visible sur la figure 10.

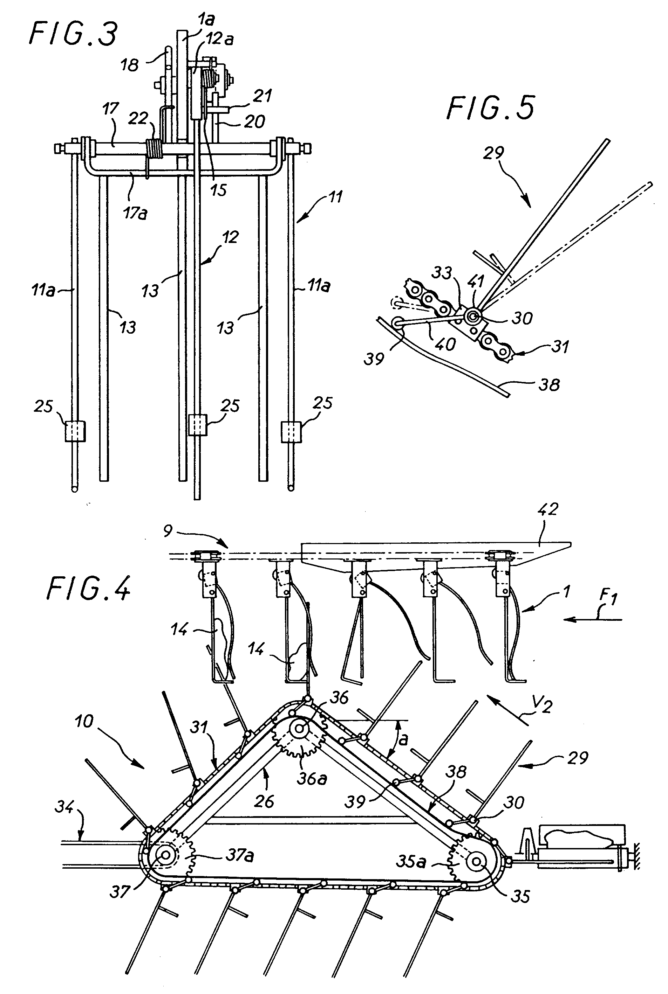

Comme le montre la figure 4, une partie de la course dudit convoyeur-élévateur 10 est ascendante pour acheminer lesdits seconds supports d'objets 29 jusqu'au niveau desdits premiers supports d'objets 1 formant pinces.

Par ailleurs, des moyens d'actionnement des supports d'objets formant pinces 1 sont agencés, d'une part sous la forme d'une came 42, en un emplacement de chargement et d'autre part, sous la forme de butées rétractables 19, auxdits emplacements de réception. Chaque emplacement de réception est ici matérialisé par un réceptacle 23 au-dessus duquel se trouve placée, à un endroit prédéterminé par rapport au trajet des supports d'objets 1, une telle butée rétractable 19, commandée. Chaque butée rétractable est ici constituée par un électro-aimant à noyau mobile, le noyau constituant plus particulièrement ladite butée rétractable. Les supports d'objets 1 formant pinces sont fixés à une chaîne 2 constituant le moyen de transport du convoyeur-distributeur 9. Cette chaîne est agencée globalement horizontalement au-dessus des emplacements de réception, c'est-à-dire au-dessus des réceptacles 23. La chaîne 2 porte l'ensemble des supports d'objets formant pinces 1.

Chaque support d'objet 1 comporte un socle 1a fixé à la chaîne 1, un bras mobile avant 11 et un bras mobile arrière 12, tous deux articulés au socle 1a. Il comporte en outre des broches 13, fixes par rapport au socle 1a et situées dans un plan vertical, transversal à la chaîne. Ces broches servent d'appui et de butée de référence pour l'objet. Le socle la est fixé à une plaque 7a de la chaîne par l'intermédiaire d'une seule vis 3. Un évidement 4, pratiqué à l'extrémité du socle, reçoit une tête de rivet 5, de la chaîne, ce qui permet de plaquer parfaitement le socle contre la plaque 7a et surtout de l'immobiliser en rotation par rapport à la chaîne, tout en assurant un Positionnement du socle dans le sens longitudinal de la chaîne, sans précaution particulière au montage. Un trou 6 dans l'autre plaque 7b sert au passage de l'outil de serrage, ce qui permet un démontage et un remontage rapides du support d'objet 1. Toutes les plaques supérieures 7b des maillons de la chaîne sont ainsi percées de trous 6, permettant la fixation de supports d'objets tout au long de la chaîne avec un espacement adapté au système d'insertion représenté sur la figure 4 et à la taille moyenne des produits à trier. La chaîne 2 et les supports d'objets 1 se déplacent suivant la flèche F1. Les qualificatifs "avant" et "arrière" donnés aux bras mobiles 11 et 12, respectivement, se comprennent par rapport au sens de déplacement F1 de la chaîne. Le bras mobile avant 11 comporte un axe horizontal 17 monté tournant dans une chape 17a solidaire du socle 1a et deux tiges 11a, parallèles, et dont les extrémités inférieures sont recourbées de 90° de façon à former une sorte de râteau. Le bras mobile avant 11 pivote dans le sens de la flèche F2 tandis que le bras mobile arrière pivote dans le sens de la flèche F3.

Les deux bras 11, 12, sont élastiquement sollicités par ressorts l'un vers l'autre en direction du plan des broches 13. Pour ce faire, le bras 12 est fixé à un élément plat 12a monté pivotant sur un axe 16 du socle 1a et un ressort en spirale 15 est monté sur cet axe et connecté entre ledit socle et ledit élément plat de façon à solliciter le bras 12 vers sa position sensiblement verticale. De cette façon, l'objet 14 est maintenu plaqué contre les broches 13 par le bras mobile 12. De la même manière, un ressort en spirale 22 est monté sur l'axe 17 et connecté entre ledit bras et ladite chape solidaire du socle pour solliciter le bras 11 vers sa position verticale de repos.

Le bras mobile 12 est nécessaire pour empêcher l'objet de tomber en arrière lors du déplacement, compte tenu du fait que la partie fixe et notamment l'ensemble des broches, se situe en avant de l'objet, par rapport au sens de déplacement. Ce positionnement de l'objet à l'arrière de l'ensemble des broches 13 permet de le lâcher sans le propulser en avant (autrement que par sa propre énergie cynétique) quelle que soit la vitesse de déplacement du convoyeur-distributeur. Cet agencement permet donc une grande précision dans le contrôle de la chute de l'objet.

On va maintenant décrire des éléments solidaires des bras mobiles 11 et 12, agencés et conformés pour coopérer avec les moyens d'actionnement 19, 42 décrits ci-dessus.

Le bras mobile avant 11 est prolongé à sa partie supérieure par une tige coudée 18 formant levier et lesdites butées rétractables 19 sont placées en regard du trajet de cette tige coudée. Par ailleurs, le bras mobile arrière 12 comporte, monté sur l'élément plat 12a, un axe 46 sur lequel est monté un galet fou 45, placé de façon à pouvoir coopérer avec la came 42, fixe, disposée à l'emplacement de chargement décrit plus haut.

Ainsi, une butée rétractable actionnée provoque l'ouverture de la pince à un emplacement de réception sélectionné, par une action directe sur le bras avant 11, tandis que la came 42 provoque l'ouverture de la même pince, à l'emplacement de chargement, par une action directe sur le bras arrière 12. Cependant, les mouvements des deux bras sont liés l'un à l'autre. Ainsi, le bras mobile arrière 12 comporte une butée auxiliaire 21, transversale coopérant avec un levier 20 solidaire du bras mobile avant (ledit levier étant fixé à l'axe 17 et s'étendant perpendiculairement à celui-ci) pour que le basculement du bras mobile avant entraîne le basculement du bras mobile arrière. Par ailleurs, le bras mobile arrière comporte un galet 44 (ou moyen de butée analogue) susceptible de coopérer avec un levier du bras mobile avant, en l'occurrence ici le même levier 20, pour que le basculement du bras mobile arrière entraîne celui du bras mobile avant. Plus précisément, le levier 20 s'étend entre ladite butée auxiliaire 21 et le galet 44 de sorte que c'est ce levier 20 qui est agencé pour pouvoir repousser la butée auxiliaire à l'actionnement du bras mobile avant ou pour être repoussé par le galet 44 à l'actionnement du bras mobile arrière. Le galet 44 est un galet fou monté également sur l'axe 46. Le diamètre du galet 44 et la position de repos du levier 20 sont tels que le bras mobile arrière puisse pivoter d'un certain angle sans provoquer le pivotement du bras mobile avant.

Le rapport de bras de levier entre l'axe 17 et la butée 21 permet au bras mobile arrière 12 de se déplacer plus vite que le bras mobile avant 11 lors de l'ouverture à un emplacement de relâchement. On supprime ainsi le maintien de l'objet en translation par le bras mobile arrière 12 avant de supprimer le maintien "en gravité" de l'objet 14 par le dégagement de la partie inférieure du bras mobile avant 11. Ainsi, le lâcher de l'objet 14 se réalise au moment où l'extrémité B du bras mobile 11 se déplace dans la direction de la flèche F2 et dépasse le plan des broches fixes 13. L'objet est alors totalement
hors de contact du support d'objet et ne reçoit plus de force de translation, permettant ainsi un lâcher précis de l'objet à son lieu de destination. La longueur de la tige 18 est fonction du temps souhaité d'ouverture, l'inclinaison de l'extrémité déterminant la vitesse de fermeture.

Selon une particularité avantageuse, le bras mobile 12 comporte un arrondi A qui permet de dégager un volume important lors du chargement des objets. Une bague de caoutchouc 25 est positionnée sur le bras mobile 12 au point de contact avec l'objet 14. On peut aussi prévoir une ou plusieurs bagues de caoutchouc 25 sur le bras mobile 11 afin d'éviter le glissement latéral des objets, notamment en raison de la force centrifuge lorsque le support d'objet formant pince est entraîné en rotation au voisinage des pignons de la chaîne, située aux deux extrémités de la machine.

Plusieurs bras mobiles 11 ou 12 peuvent être montés sur les mêmes axes liés au socle 1a, en fonction de la longueur de l'objet, ce qui ne modifie en rien le principe de fonctionnement de la machine. D'autres formes et profils de bras mobiles 11 et 12 peuvent être réalisés en fonction des formes et des masses des objets transportés, sans sortir du cadre de l'invention.

Les figures 6 à 9 illustrent le lâchage d'un objet au-dessus d'un emplacement de réception 23 sélectionné, le support d'objet formant pince étant représenté comme sur la figure 1 et se déplaçant suivant le sens de la flèche F1. La figure 6 montre un objet 14 maintenu par le bras mobile 11 et les broches 13 dans un même plan vertical, d'une part, et par le bras mobile 12 d'autre part. La figure 7 montre le début de la phase de lâchage de l'objet, lorsque le levier 18 entre en contact avec la butée rétractable 19. On constate que le bras mobile arrière 12 n'est déjà plus en contact avec l'objet 14 alors que le bras mobile 11 retient encore l'objet dans le sens de la chute. La figure 8 montre l'objet commençant à tomber tout en étant dégagé du support. La figure 9 montre le support d'objet formant pince vide; il restera dans cette position jusqu'à son retour à l'emplacement de chargement.

L'examen de l'ensemble des figures 4 à 9 montre que l'objet, même entraîné à grande vitesse, tombe pratiquement verticalement au moment précis du dégagement complet du bras mobile 11 sans être projeté en avant ni entraîné par le bras mobile arrière. Les bras mobiles 11 et 12 ainsi que les broches 13 sont réalisés en tiges métalliques fines. Ils sont implantés à des entr'axes convenablement choisis pour permettre aux fourches 29 du convoyeur-élévateur représenté à la figure 4 de passer entre les bras mobiles 11, 12 et les broches 13 du support d'objet formant pince, au moment du chargement.

On va maintenant décrire le convoyeur-élévateur 10 situé à l'emplacement de chargement.

Le convoyeur-élévateur 10 comporte un bâti 26 à profil triangulaire. Ce bâti a globalement la forme d'un dièdre et chacune de ses trois extrémités porte un palier rotatif 35, 36, 37 supportant, de chaque côté du bâti, un pignon denté 35a, 36a, 37a, respectivement. Ces six pignons sont tous clavetés "en phase" sur leurs paliers respectifs et se répartissent en deux groupes situés dans deux plans parallèles de chaque côté du bâti. Les pignons de ces deux groupes portent deux chaînes 31, 32 respectivement, agencées ainsi dans des plans verticaux parallèles, de chaque côté du bâti et assujetties à se déplacer dans ces deux plans. Chaque chaîne a donc de ce fait une configuration approximativement triangulaire et les pignons des deux groupes sont coaxiaux deux à deux puisque fixés aux extrémités de trois paliers portés par le bâti. Les seconds supports d'objets 29 formant fourches sont montés transversalement entre ces deux chaînes, comme le montre la figure 10. Chaque support formant fourche comporte un axe horizontal 30 reçu en articulation dans des plaques spéciales 33 montées sur les chaînes 31, 32. De cette façon, les fourches ont une certaine possibilité de basculement par rapport aux chaînes et au bâti du convoyeur-élévateur. De plus, chaque support d'objet formant fourche comporte un bras 40 formant palpeur tandis qu'un rail 38, fermé sur lui-même avec une configuration approximativement triangulaire, est solidaire du bâti et forme une sorte de came. Le rail est agencé dans un plan vertical, ici entre les deux chaînes, mais il pourrait se situer sur l'un des côtés du bâti, au-delà des chaînes. Chaque support d'objet formant fourche 29 comporte au moins un ressort 41 agencé autour de l'axe 30 et s'exerçant sur ledit support d'objet pour maintenir un contact permanent entre le bras-palpeur 40 et le rail-came 38. L'extrémité dudit bras-palpeur 40 est muni d'un galet 39 roulant sur ledit rail-came 38. Ainsi, grâce à la forme prédéterminée du rail-came 38, l'inclinaison du support d'objet se trouve déterminée en permanence tout au long de son parcours autour du bâti. Cet agencement assure une inclinaison précise et rigide de la fourche 29 dans le sens de fonctionnement, tout en permettant une inclinaison souple en sens inverse, en comprimant le ou les ressorts 41, ce qui permet de compenser d'éventuelles différences d'épaisseur, d'un objet à l'autre, au moment du transfert entre la fourche 29 et le porte-objet formant pince, au niveau du palier 36. Par ailleurs, la possibilité de faire basculer la fourche dans le sens inverse du déplacement, contre la force du ressort 41 évite une détérioration de ladite fourche ou d'un objet transporté, en cas d'incident. La prise de l'objet par une fourche se fait à l'horizontale au voisinage du palier 35. Le transfert de l'objet d'un support d'objet formant fourche à un support d'objet formant pince se fait au niveau du palier supérieur 36 avec la fourche sensiblement en position verticale. Les intervalles entre les plaques 33 de montage des fourches sur les chaînes du convoyeur-élévateur sont déterminés de façon à assurer une synchronisation avec les supports d'objets 1 formant pinces. La vitesse V2 des chaînes 31, 32 est calculée en fonction de l'angle a qu'une telle chaîne fait par rapport à l'horizontale entre les paliers 35 et 36, de façon à obtenir une bonne synchronisation dans la partie montante entre les deux convoyeurs. Cette synchronisation est assurée par renvoi d'angle et courroie crantée 34 fixant ainsi le rapport des vitesses nécessaire entre le convoyeur-élévateur et le convoyeur-distributeur. De plus, la longueur et/ou l'inclinaison de chaque bras 40 formant palpeur est réglable par rapport au reste du support d'objet formant fourche, correspondant.

Les figures 10 et 11 illustrent des moyens de transport des objets vers le convoyeur-élévateur et le système d'insertion de ces objets dans les fourches. Ces moyens de transport comportent un tapis roulant à bandes transporteuses 51, sur lequel sont déposés les objets. Ils comportent en outre une pluralité de rouleaux rotatifs 50 parallèles, montés en porte à faux par leurs axes sur un support commun et une butée 52, de préférence réglable, pour l'immobilisation d'un objet sur lesdits rouleaux. L'agencement est tel que les trajets des doigts des supports d'objets formant fourches 29 passent entre lesdits rouleaux, pour la saisie des objets.

Une barrière optique à réflexion 47 détecte la présence d'un objet et commande des électro-aimants 48 qui arrêtent l'objet par l'intermédiaire de broches 49 positionnées entre les bandes du tapis roulant. Lors de l'arrêt de l'objet en butée sur les broches 49, le système de reconnaissance de la machine détermine la destination de l'objet. L'information est mise en mémoire dans un ordinateur qui commmande la sortie d'une butée 19 correspondant à un emplacement de réception, au moment du passage de l'objet.

L'admission de l'objet sur les rouleaux est commandée lorsqu'une fourche 29 se trouve au-dessus des rouleaux 50 à une distance suffisante pour permettre le passage de l'objet ou lorsqu'une telle fourche arrive en-dessous des rouleaux 50. Le dispositif de synchronisation commande le retrait des broches 49 et l'objet se trouve alors propulsé sur les rouleaux 50 par les bandes transporteuses. Les rouleaux 50 sont entraînés ensemble par des courroies rondes situées du côté des fixations des axes. Les rouleaux rotatifs entraînent l'objet et le maintiennent en position sur la butée réglable 52 jusqu'à l'arrivée de la fourche 29 qui soulève l'objet à l'horizontale, puis l'incline en arrière pour assurer son maintien, jusqu'à l'insertion dans la pince 1, en position verticale. La butée réglable 52 est pilotée par le système de reconnaissance de l'objet qui détermine la position de cette butée afin de garantir un bon centrage de l'objet sur son support. La butée peut être commandée par un vérin électrique.

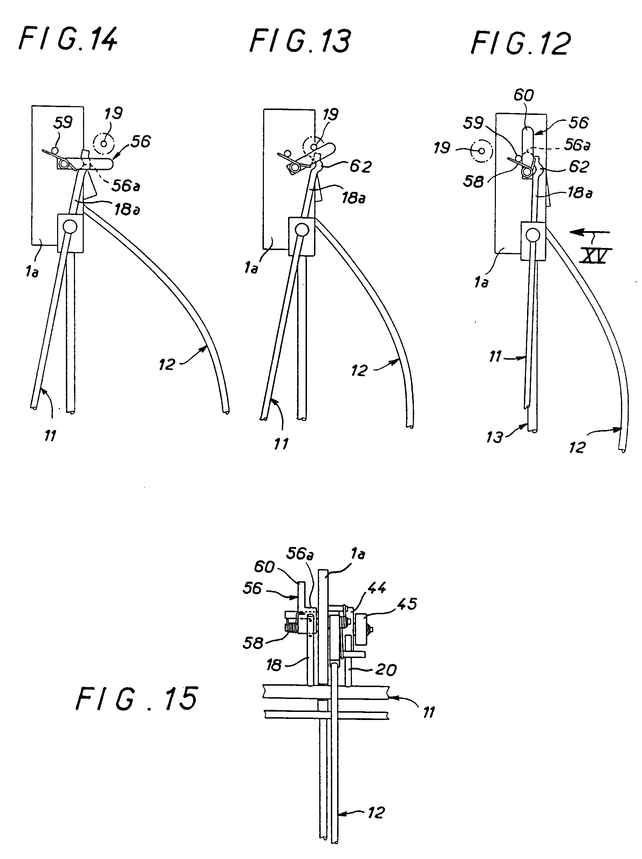

Les figures 12 à 15 illustrent une variante de construction du porte-objet formant pince, permettant de maintenir ouverte ladite pince après le lâcher de l'objet.

Selon cette variante, le bras mobile avant comporte un simple levier 18a remplaçant la tige coudée 18. Ce levier est en contact latéral avec un taquet basculant 56 (ou tout autre moyen formant came, analogue) monté pivotant sur le socle 1a et sollicité vers une position de repos, ici verticale, par un ressort 58. La position de repos du taquet est définie par un pion 59 fixé au socle 1a. Par ailleurs, les moyens de sollicitation du bras mobile avant (ressort 22) appliquent le levier 18a contre le taquet. Un élément d'actionnement 60 de ce dernier est susceptible de rencontrer une butée rétractable 19. Ces dernières sont en effet placées en regard du trajet commun de tous les éléments 60 des porte-objets formant pinces.

En outre, le levier 18a et le taquet sont conformés pour définir une position basculée stable (voir figure 14) du bras mobile avant. Dans l'exemple représenté, le taquet 56 comporte à cet effet une extrémité arrondie 56a qui coopère avec une courbure 62 pratiquée dans le levier 18a.

Le fonctionnement est tel qu'illustré aux figures 12 à 14. Sous l'effet d'une butée rétractable 19, le taquet 56 bascule de 90° environ et repousse le levier 18a provoquant l'ouverture de la pince à un emplacement de réception. L'objet tombe à l'endroit choisi mais le taquet reste dans sa position basculée de 90° car son extrémité arrondie 56 s'est engagée dans la courbure 62 du levier (figure 14). La pince reste donc ouverte pendant tout le reste de son trajet de retour vers l'emplacement de chargement. A cet emplacement, la pince s'ouvre encore davantage sous l'action de la came 42 sur le galet 45 dans un premier temps et sous l'action du galet 44 sur le levier 20 dans un second temps. Cette ouverture de la pince provoque la libération du taquet qui revient à sa position stable sous l'action du ressort 58. La pince est alors prête pour un nouveau trajet vers un emplacement de réception sélectionné pour l'objet. Cet agencement évite que l'objet ne soit resaisi au moment de sa chute par la pince se refermant trop rapidement. Ceci permet d'augmenter notablement la vitesse de fonctionnement de la machine.

## Revendications

1. Machine de tri automatique d'objets, comprenant:
- un convoyeur-distributeur (9) en boucle fermée, agencé essentiellement horizontalement au-dessus d'un certain nombre d'emplacements de réception et portant une pluralité de premiers supports d'objets commandés,
- des moyens d'actionnement (19) desdits premiers supports d'objets, placés auxdits emplacements de réception,
- un convoyeur-élévateur (10) en boucle fermée muni d'une pluralité de seconds supports d'objets, agencé au-dessous dudit convoyeur-distributeur et au voisinage d'un emplacement de chargement, une partie de la course dudit convoyeur-élévateur étant ascendante pour acheminer lesdits seconds supports d'objets jusqu'au niveau desdits premiers supports d'objets,
caractérisée en ce que chaque premier support d'objet comporte un bras mobile avant (11) et un bras mobile arrière (12) articulés et sollicités par ressort l'un vers l'autre pour former une pince, en ce que des moyens d'actionnement (42) sont prévus audit emplacement de chargement pour ouvrir une pince précitée qui s'y présente et en ce que les trajectoires dudit convoyeur-distributeur (19) et dudit convoyeur-élévateur (10) sont telles que lesdits seconds supports d'objets apportent respectivement lesdits objets dans lesdits premiers supports d'objets ouverts.

2. Machine selon la revendication 1, caractérisé en ce que les seconds supports d'objets (29) forment fourches et sont montés transversalement entre deux chaînes (31, 32) ou analogue, assujetties à se déplacer dans deux plans verticaux parallèles.

3. Machine selon la revendication 2, caractérisée en ce que ledit convoyeur-élévateur (10) comporte un bâti (26) portant deux groupes de trois pignons (35, 36, 37) ou analogues, en ce que les pignons d'un même groupe sont situés dans un plan vertical précité et portent la chaîne correspondante en lui donnant une configuration approximativement triangulaire, les pignons des deux groupes étant coaxiaux deux à deux.

4. Machine selon la revendication 3, caractérisée en ce que chaque support d'objet formant fourche (29) est monté avec possibilité de basculement par rapport audit convoyeur-élévateur et en ce qu'il comporte un bras (40) formant palpeur, en ce que ledit bâti comporte un rail formant came agencé dans un plan vertical et en ce qu'un ressort sollicite ledit support d'objet dans un sens permettant audit bras de rester en contact avec ledit rail (38) formant came, déterminant ainsi en permanence l'inclinaison dudit support d'objet.

5. Machine selon la revendication 4, caractérisée en ce que ledit convoyeur-élévateur (10) est alimenté par des moyens de transport desdits objets, comportant notamment plusieurs rouleaux rotatifs (50) parallèles montés en porte à faux et une butée (52), de préférence réglable, pour l'immobilisation d'un objet sur lesdits rouleaux, l'agencement étant tel que les trajets des doigts des supports d'objets formant fourches (29) passent entre lesdits rouleaux pour la saisie des objets.

6. Machine selon la revendication 4, caractérisée en ce que l'extrémité de chaque bras formant palpeur est munie d'un galet de roulement (39) en contact avec ledit rail formant came (38).

7. Machine selon la revendication 6, caractérisée en ce que la longueur et/ou l'inclinaison de chaque bras formant palpeur est réglable par rapport au reste du support d'objet formant fourche, correspondant.

8. Machine selon l'une des revendications précédentes, caractérisée en ce qu'un support d'objet formant pince (1) précité comporte un socle (1a) rattaché à un moyen de transport (2) du convoyeur-distributeur, un bras mobile avant (11) précité et un bras mobile arrière (12) précité étant articulés audit socle et les deux bras étant élastiquement sollicités par ressort l'un vers l'autre en direction d'un plan sensiblement vertical et en ce que des éléments (18-45) solidaires de ces bras sont agencés et conformés pour coopérer avec les moyens d'actionnement précités.

9. Machine selon la revendication 8, caractérisée en ce que ledit moyen de transport est une chaîne (2) agencée globalement horizontalement au-dessus des emplacements de réception (23) précités.

10. Machine selon la revendication 8 ou 9, caractérisée en ce que chaque support d'objet formant pince (1) comporte en outre des broches (13) fixes par rapport audit socle et situées dans ledit plan sensiblement vertical.

11. Machine selon l'une des revendications 8 à 10, caractérisée en ce que lesdits moyens d'actionnement desdits supports d'objets formant pinces comprennent des butées rétractables (19) commandées, telles que par exemple des électro-aimants à noyau mobile et une came (45) placée audit emplacement de chargement.

12. Machine selon la revendication 11, caractérisée en ce qu'un bras mobile avant (11) précité est prolongé à sa partie supérieure par une tige coudée (18) formant levier et en ce que lesdites butées rétractables sont placées en regard du trajet de cette tige coudée.

13. Machine selon la revendication 11, caractérisée en ce qu'un bras mobile avant précité comporte un levier d'actionnement (18a), en contact latéral avec un taquet basculant (56) ou analogue monté pivotant sur ledit socle et sollicité élastiquement par un ressort (58) vers une position de repos, en ce que lesdites butées rétractables (19) sont placées en regard du trajet d'un élément d'actionnement (60) dudit taquet et en ce que ledit levier et ledit taquet sont conformés pour définir une position basculée stable dudit bras mobile avant.

14. Machine selon la revendication 12, caractérisée en ce que ledit levier d'actionnement (18a) comporte une courbure (62) coopérant avec une extrémité arrondie (56a) dudit taquet.

15. Machine selon l'une des revendications 11 à 14, caractérisée en ce que ledit bras mobile arrière (12) comporte un galet (45) susceptible de coopérer avec la came (42) placée audit emplacement de chargement.

16. Machine selon l'une des revendications 8 à 15, caractérisée en ce que ledit bras mobile arrière (12) comporte une butée auxiliaire (21) coopérant avec ledit bras mobile avant pour que le basculement du bras mobile avant entraîne celui du bras mobile arrière.

17. Machine selon la revendication 16, caractérisée en ce que ledit bras mobile arrière comporte un galet (44) ou analogue, susceptible de coopérer avec un levier (20) du bras mobile avant pour que le basculement du bras mobile arrière entraîne celui du bras mobile avant.

18. Machine selon la revendication 17, caractérisée en ce que ledit bras mobile avant comporte un levier (20) s'étendant entre ladite butée auxiliaire et ce galet (44), de façon à pouvoir repousser ladite butée auxiliaire ou être repoussé par ledit galet.

19. Machine selon l'une des revendications 9 à 18, caractérisée en ce que ledit socle est fixé par une vis (3) à ladite chaîne et en ce qu'il comporte un évidement (4) recevant une tête de rivet (5) de ladite chaîne, pour l'immobilisation en rotation du support d'objet correspondant par rapport à ladite chaîne.

20. Machine selon l'une des revendications précédentes, caractérisée en ce que la composante horizontale du déplacement dudit convoyeur-élévateur est de même sens que celui du déplacement dudit convoyeur-distributeur.

## Claims

1. A machine for the automatic sorting of objects, comprising:
- a conveyer-dispenser (9) in closed loop, arranged substantially horizontally above a certain number of receiving locations and bearing a plurality of first supports for the objects to be controlled,
- actuating means (19) for said first supports for the objects, placed at said receiving locations,
- a conveyer-hoist (10) in closed loop provided with a plurality of second supports for objects, arranged below said conveyer-dispenser and in the vicinity of a loading location, one part of the trajectory of said conveyer-hoist being ascending in order to bring said second supports for the objects to the level of said first supports for the objects,
characterised in that each first support for an object comprises a front movable arm (11) and a rear movable arm (12) which are hinged and urged by a spring towards each other in such a way as to form a clamping means, and in that actuating means (42) are provided at said loading location to open an aforementioned clamping means which is provided there and in that the paths of said conveyer-dispenser (19) and of said conveyer-hoist (10) are such that said second supports for the objects respectively bring said objects into said first open supports for the objects,

2. A machine according to Claim 1, characterised in that the second supports (29) for the objects form forks and are mounted transversely between two chains (31, 32), or the like, constrained to move in two vertical, parallel planes.

3. A machine according to Claim 2, characterised in that said conveyor-hoist (10) comprises a framework (26) carrying two groups of three pinions (35, 36, 37) or the like, in that the pinions of a same group are disposed in an afore-mentioned vertical plane and support the corresponding chain, giving it an approximately triangular configuration, the pinions of the two groups being coaxial in pairs.

4. A machine according to Claim 3, characterised in that each support for an object in the form of a fork (29) is mounted so that it is capable of swinging relative to said conveyer-hoist and in that it comprises an arm (40) forming a feeler, in that said framework comprises a rail which forms a cam arranged in a vertical plane and in that a spring urges said support for an object in a direction which enables the arm to remain in contact with said rail (38) forming a cam, thereby permanently defining the inclination of said support for an object.

5. A machine according to Claim 4, characterised in that said conveyer-hoist (10) is supplied by way of transportation means with said objects, comprising, in particular, a plurality of parallel rotating rollers (50) mounted in cantilever fashion and an abutment (52), preferably adjustable, to immobilise an object on said rollers, the arrangement being such that the paths of the prongs of the supports for the objects in the form of forks (29) pass between said rollers to grasp hold of the objects.

6. A machine according to Claim 4, characterised in that the end of each arm which forms a feeler is provided with a roller disc (39) in contact with said rail forming a cam (38).

7. A machine according to Claim 6, characterised in that the length and/or inclination of each arm forming a feeler is adjustable relative to the rest of the corresponding support for an object in the form of a fork.

8. A machine according to one of the preceding claims, characterised in that an afore-mentioned support for an object in the form of a clamping means (1) comprises a base (1a) connected to a transportation means (2) for the conveyer-dispenser, an aforementioned front movable arm (11) and an afore-mentioned rear movable arm (12) being hinged to said base, and the two arms being resiliently urged by a spring towards each other in the direction of a plane which is substantially vertical, and in that elements (18-45) which are integral with the arms are provided and are capable of cooperating with the afore-mentioned actuating means.

9. A machine according to Claim 8, characterised in that said transportation means is a chain (2) arranged substantially horizontally above the aforementioned receiving locations (23).

10. A machine according to Claim 8 or Claim 9, characterised in that each support for an object in the form of a clamping means (1) additionally comprises spindles (13) fixed relative to said base and disposed in said substantially vertical plane.

11. A machine according to one of Claims 8 to 10, characterised in that said actuating means of said supports for objects in the form of clamping means comprise controlled retractable (19) stops, for example electromagnets with a movable core and a cam (45) placed at said loading location.

12. A machine according to Claim 11, characterised in that the upper part of an aforesaid front movable arm (11) is extended by a bent rod (18) forming a lever and in that said retractable stops are placed opposite the path of this bent rod.

13. A machine according to Claim 11, characterised in that an aforementioned front movable arm comprises an actuating lever (18a) in contact laterally with a swinging tappet (56), or the like, pivotally mounted to said base and urged resiliently by a spring (58) towards a position of rest, in that said retractable abutments (19) are placed opposite the path of an actuating element (60) of said tappet and in that said lever and said tappet are designed such that they define a stable swinging position for said front movable arm.

14. A machine according to Claim 12, characterised in that said actuating lever (18a) comprises a bend (62) which cooperates with a rounded end (56a) of said tappet.

15. A machine according to one of Claims 11 to 14, characterised in that said rear movable arm (12) comprises a disc (45) capable of cooperating with the cam (42) placed at said loading location.

16. A machine according to one of Claims 8 to 15, characterised in that said rear movable arm (12) comprises an auxiliary abutment (21) cooperating with said front moving arm so that the swinging movement of the front movable arm triggers that of the rear movable arm.

17. A machine according to Claim 16, characterised in that said rear movable arm comprises a disc (44), or the like, capable of cooperating with a lever (20) of the front movable arm in order that the swinging movement of the rear movable arm triggers that of the front movable arm.

18. A machine according to Claim 17, characterised in that said front movable arm comprises a lever (20) which extends between said auxiliary abutment and the disc (44), in such a way as to enable said auxiliary abutment to be pushed back or to be pushed back by said disc.

19. A machine according to one of Claims 9 to 18, characterised in that said base is fixed by a screw (3) to said chain and in that it comprises a recess (4) which receives a rivet head (5) of said chain, to immobilise the corresponding support for an object, in rotation, relative to said chain.

20. A machine according to one of the preceding claims, characterised in that the horizontal component of displacement of said conveyer-hoist is in the same direction as the component of displacement of said conveyer-dispenser.

## Patentansprüche

1. Selbsttätige Sortierungsvorrichtung für Objekte, umfassend:
- eine Förder- und Verteilvorrichtung (9) in geschlossenem Kreis, die im wesentlichen horizontal über einer gewissen Anzahl von Aufnahmestellen angeordnet ist und eine Vielzahl von ersten gesteuerten Objektträgern trägt,
- Mittel (19) zur Betätigung dieser ersten Objektträger, die an diesen Aufnahmestellen angeordnet sind,
- eine Förder- und Hebevorrichtung (10) in geschlossenem Kreis, die mit einer Vielzahl von zweiten Objektträgern versehen ist und unter dieser Förder- und Verteilvorrichtung und in Nähe einer Beschickungsstelle angeordnet ist, wobei ein Teil des Wegs dieser Förder- und Hebevorrichtung aufsteigend ist, um die zweiten Objektträger bis in die Höhe der ersten Objektträger zu befördern,
dadurch gekennzeichnet, daß jeder erste Objektträger einen beweglichen vorderen Arm (11) und einen beweglichen hinteren Arm (12) umfaßt, die angelenkt und durch Feder aufeinander zu beaufschlagt sind, um eine Zange zu formen, daß Betätigungsmittel (42) an dieser Beschickungsstelle vorgesehen sind, um eine Zange zu öffnen, die hier erscheint, und daß die Bewegungsbahnen dieser Förder- und Verteilvorrichtung (19) und dieser Förder- und Hebevorrichtung (10) so sind, daß die zweiten Objektträger die Objekte in die offenen ersten Objektträger bringen.

2. Vorrichtung nach Anspruch 1, dadurch gekennzeichnet, daß die zweiten Objektträger (29) Gabeln formen und quer zwischen zwei Ketten (31, 32) oder dergl. so montiert sind, daß sie sich in zwei vertikalen parallelen Ebenen bewegen.

3. Vorrichtung nach Anspruch 2, dadurch gekennzeichnet, daß die Förder- und Hebevorrichtung (10) einen Rahmen (26) umfaßt, der zwei Gruppen von drei Zahnrädern (35, 36, 37) oder dergl. trägt, daß die Zahnräder ein und derselben Gruppe in einer obengenannten vertikalen Ebene gelegen sind und die entsprechende Kette tragen, indem sie ihr eine annähernd dreieckige Konfiguration verleihen, wobei die Zahnräder der beiden Gruppen paarweise koaxial sind.

4. Vorrichtung nach Anspruch 3, dadurch gekennzeichnet, daß jeder eine Gabel formende Objektträger (29) mit Kippmöglichkeit bezüglich der Förder- und Hebevorrichtung montiert ist und daß er einen einen Fühler formenden Arm (40) umfaßt, daß der Rahmen eine eine Steuerkurve formende und in einer vertikalen Ebene angeordnete Schiene umfaßt und daß eine Feder diesen Objektträger in einer Richtung beaufschlagt, die es dem Arm gestattet, mit der eine Steuerkurve formenden Schiene (38) in Kontakt zu bleiben, wodurch ständig die Neigung des Objektträgers bestimmt wird.

5. Vorrichtung nach Anspruch 4, dadurch gekennzeichnet, daß die Förder- und Hebevorrichtung (10) durch Mittel zur Beförderung der Objekte gespeist ist, die insbesondere mehrere rotierende, parallele, auskragende Rollen (50) und einen vorzugsweise verstellbaren Anschlag (52) umfassen, um ein Objekt auf den Rollen zu blockieren, wobei die Anordnung so ist, daß die Bewegungsbahnen der Daumen der Gabeln bildenden Objektträger (29) zwischen diesen Rollen passieren, um Objekte zu ergreifen.

6. Vorrichtung nach Anspruch 4, dadurch gekennzeichnet, daß das Ende jedes einen Fühler formenden Arms mit einer Laufrolle (39) versehen ist, die mit der eine Steuerkurve formenden Schiene (38) in Kontakt ist.

7. Vorrichtung nach Anspruch 6, dadurch gekennzeichnet, daß die Länge und/oder die Neigung jedes einen Fühler formenden Arms bezüglich des Rests des entsprechenden eine Gabel formenden Objektträgers verstellbar ist.

8. Vorrichtung nach einem der vorhergehenden Ansprüche, dadurch gekennzeichnet, daß ein eine Zange formender Objektträger (1) einen Sockel (1a) umfaßt, der an einem Fördermittel (2) der Förder- und Verteilvorrichtung angebracht ist, wobei ein vorderer beweglicher Arm (11) und ein hinterer beweglicher Arm (12) an diesem Sockel angelenkt sind und die beiden Arme durch Feder elastisch aufeinander zu in Richtung einer im wesentlichen vertikalen Ebene beaufschlagt sind und daß mit diesen Armen fest verbundene Elemente (18-45) angeordnet und ausgebildet sind, um mit den genannten Betätigungsmitteln zusammenzuwirken.

9. Maschine nach Anspruch 8, dadurch gekennzeichnet, daß das Fördermittel eine Kette (2) ist, die insgesamt horizontal über den Aufnahmestellen (23) angeordnet ist.

10. Vorrichtung nach Anspruch 8 oder 9, dadurch gekennzeichnet, daß jeder eine Zange bildende Objektträger (1) außerdem bezüglich des Sockels feststehende Stifte (13) umfaßt, die in dieser im wesentlichen vertikalen Ebene gelegen sind.

11. Vorrichtung nach einem der Ansprüche 8 bis 10, dadurch gekennzeichnet, daß die Mittel zur Betätigung der Zangen bildenden Objektträger gesteuerte zurückziehbare Anschläge (19) wie beispielsweise Elektromagnete mit beweglichem Kern und einen an der Beschickungsstelle angeordneten Nocken (45) umfassen.

12. Vorrichtung nach Anspruch 11, dadurch gekennzeichnet, daß ein vorderer beweglicher Arm (11) an seinem oberen Teil durch eine einen Hebel bildende gebogene Stange (18) verlängert ist und daß die zurückziehbaren Anschläge der Bewegungsbahn dieser gebogenen Stange gegenüberstehend angeordnet sind.

13. Vorrichtung nach Anspruch 11, dadurch gekennzeichnet, daß ein beweglicher vorderer Arm einen Betätigungshebel (18a) umfaßt, der mit einem kippbaren Daumen (56) oder dergl. in seitlichem Kontakt ist, der verschwenkbar an dem Sockel montiert ist und elastisch durch eine Feder (58) in Richtung auf eine Ruhestellung beaufschlagt ist, daß die zurückziehbaren Anschläge (19) der Bewegungsbahn eines Betätigungselements (60) des Daumens gegenüberstehend angeordnet sind und daß der Hebel und der Daumen ausgebildet sind, um eine stabile gekippte Stellung des vorderen beweglichen Arms zu definieren.

14. Vorrichtung nach Anspruch 12, dadurch gekennzeichnet, daß der Betätigungshebel (18a) eine Krümmung (62) besitzt, die mit einem abgerundeten Ende (56a) des Daumens zusammenwirkt.

15. Maschine nach den Ansprüchen 11 bis 14, dadurch gekennzeichnet, daß der hintere bewegliche Arm (12) eine Rolle (45) besitzt, die mit dem an der Beschickungsstelle angeordneten Nocken (42) zusammenwirken kann.

16. Vorrichtung nach einem der Ansprüche 8 bis 15, dadurch gekennzeichnet, daß der hintere bewegliche Arm (12) einen zusätzlichen Anschlag (21) besitzt, der mit dem vorderen beweglichen Arm zusammenwirkt, damit das Kippen des vorderen beweglichen Arms dasjenige des hinteren beweglichen Arms mit sich bringt.

17. Vorrichtung nach Anspruch 16, dadurch gekennzeichnet, daß der hintere bewegliche Arm eine Rolle (44) oder dergl. umfaßt, die mit einem Hebel (20) des vorderen beweglichen Arms zusammenwirken kann, damit das Kippen des hinteren beweglichen Arms dasjenige des vorderen beweglichen Arms mit sich bringt.

18. Vorrichtung nach Anspruch 17, dadurch gekennzeichnet, daß der vordere bewegliche Arm einen Hebel (20) umfaßt, der sich zwischen dem zusätzlichen Anschlag und der Rolle (44) erstreckt, so daß er den zusätzlichen Anschlag zurückdrücken kann oder von der Rolle zurückgedrückt werden kann.

19. Vorrichtung nach einem der Ansprüche 9 bis 18, dadurch gekennzeichnet, daß der Sockel durch eine Schraube (3) an der Kette befestigt ist und daß er eine Aussparung (4) umfaßt, die den Nietkopf (5) der Kette aufnimmt, um den entsprechenden Objektträger bezüglich der Kette hinsichtlich Drehung zu blockieren.

20. Vorrichtung nach einem der vorhergehenden Ansprüche, dadurch gekennzeichnet, daß die horizontale Komponente der Bewegung der Förder- und Hebevorrichtung dieselbe Richtung hat wie die der Bewegung der Förder- und Verteilvorrichtung.
